# EUROPEAN PATENT APPLICATION

(11) **EP 4 140 932 A1**
(43) Date of publication of application: **01.03.2023**
(21) Application number: 21382788.4
(22) Date of filing: 30.08.2021
(51) Int. Cl.: B66C 23/20, E04H 9/02, E04H 12/34, F03D 7/02, F03D 13/00, F03D 13/10, F03D 13/20

(54) **CLIMBING CRANE FOR ERECTING A WIND TURBINE AND METHOD FOR ERECTING A WIND TURBINE WITH A CLIMBING CRANE**

(71) Applicant: Siemens Gamesa Renewable Energy Innovation & Technology S.L., 31621 Sarriguren (Navarra) (ES)
(72) Inventor: Erro Martinez, Carlos, 31015 PAMPLONA (ES); Osorio Martinez, Juan Manuel, 31600 Burlada (NAVARRA) (ES)
(74) Representative: SGRE-Association

(57) **Abstract**

A climbing crane comprising at least a vibration damping device (31) configured for damping at least a first vibration frequency of the erected tower (12) of a wind turbine (10) when the climbing crane (20) is coupled to the tower (12) is provided.

Furthermore, a method for erecting a wind turbine with a climbing crane is also provided.

## Description

### FIELD OF THE INVENTION

The present invention relates to a climbing crane for the erection of the wind turbine. Furthermore, the invention relates to a method of erecting a wind turbine. In particular it relates to a method of erecting a wind turbine with a climbing crane.

### BACKGROUND OF THE INVENTION

According to the state of the art, wind turbines comprise a tower fixed to a foundation, a nacelle placed on the top of the tower, a rotor coupled to the nacelle and a plurality of blades coupled to the rotor. Large wind towers often comprise a plurality of tower sections which are stacked forming the tower.

Every wind turbine reacts to external excitation caused mainly by the wind at a certain frequency with its own oscillation, said frequency being denominated the natural frequency. During the erection of the wind turbine. In particular, during the erection of the tower of the wind turbine when the rotor-nacelle assembly is not yet mounted on the tower, there is a high risk of tower oscillation due to vortex induced vibrations. Although this is the most likely time at which dangerous oscillations occur, it is not the only one, oscillation could also happen when the nacelle has been erected without the drive train or also when the nacelle has been erected without blades. This vortex induced vibrations generate alternating pressure differences over the tower cross section perpendicular to the wind direction which could cause damage to the tower or reduce its fatigue life.

To avoid this problem the most commonly used technical solutions are based on the use of helical strakes along the outer tower section structure and/or on the use of mass damper devices. Both the strakes and the mass damper devices are usually temporary equipment to be mounted and dismounted on each tower as once the wind energy installation is fully erected, the mass of the nacelle, rotor and/or blades is enough to avoid or minimize the vortex induced vibrations.

EP2851490A1 discloses a method for reducing vortex induced vibrations during transport of a wind turbine tower whilst maintaining the power output of such turbine in an operational state. The tower is equipped with a strake set comprising a number of detachable strakes positioned to lead from a top of the tower in the upright position down towards a bottom of the tower. The strake comprises a rope covered at a least along a substantial part of its longitudinal extension with a covering structure realized to substantially increase the wind resistance of the strake.

A disadvantage of the use of helical strakes is that a space to uncoil the helical strakes is needed and this is not always possible. Furthermore, as the helical strakes must be assembled and disassembled the time and cost for erecting a wind installation is increased.

EP3048295A1 discloses a vibration damping system comprising a vibration mass damper and at least a temporary platform to which the vibration damping system can be fixed within a final tower section of the turbine tower. The natural frequency of the vibration damper can be adapted either to a first frequency of the tower without nacelle or to a first frequency of the wind energy installation with the nacelle by increasing or reducing the pendulum length of the mass damper. A disadvantage of this solution is that as the vibration damper must be assembled and disassembled on the tower when erecting the wind turbine, the time and cost for erecting a wind installation being increased.

It is therefore a goal of the present invention to provide a method of erecting a wind turbine and a climbing crane which overcomes the above-mentioned disadvantages.

### SUMMARY OF THE INVENTION

The object of the invention is achieved by the independent claims. The dependent claims describe advantageous developments and modifications of the invention.

In accordance with the invention, a climbing crane for erecting a wind turbine is provided. The climbing crane may comprise at least a vibration damping device which is configured for damping at least a first vibration frequency of the erected tower when the climbing crane is coupled to the tower.

The first natural frequency is also known as the first natural bending frequency and may depend on the weight and the stiffness of the erected part, and also on the wind loads that are specific to the site where the wind turbine is erected and its meteorological conditions.

An important advantage of the climbing crane according to the present invention is that as the damping device is integrated in the climbing crane which is connected to the tower during the whole installation process, the use of extra devices for damping oscillations which are normally fixed to the tower as for example helical strakes are avoided. This implies that the installation is optimized. There is a time and cost reduction because there is no need to install and dismantle the helical strakes, and a space to uncoil the helical strakes which is especially interesting when the wind turbine is to be erected in a forest of a hill is not needed.

Moreover, any interference of the vibration damping device with the climbing crane is avoided and the complexity and space required to remove for example the helical strakes is eliminated. Furthermore, the damping device may be integrated in all the different climbing crane designs.

In an example, the vibration damping device may comprise a tunned mass damper which comprises a mass and at least a spring and/or a dashpot element through which the mass is fixed to a frame of the climbing crane.

In another example, the vibration damping device may comprise a pendulum tunned mass damper comprising a pendulum which end is fixed to a frame of the climbing crane.

In another example, the vibration damping device may comprise a viscous damped pendulum fixed to a frame of the climbing crane.

In an example, the climbing crane may comprise a plurality of vibration damping devices, each one of them being configured for being activated or deactivated for adapting the natural resultant frequency of the plurality of vibration damping devices to at least the first vibration frequency of the erected tower.

In another example, the climbing crane furthermore may comprise a plurality of vibration damping devices, each one of them being configured for being activated or deactivated for adapting the natural resultant frequency of the plurality of vibration damping devices to at least the first vibration frequency of part of the wind tower which has been already erected. This way a modular damping device is obtained which can be easily adapted to the first frequencies of each part of the wind turbine which has been erected.
In an example, the system may comprise locking means which maintain the vibration damping device in an inactive condition. This locking means allows to design a modular vibration damping device which can easily control the condition of each vibration damping device through this locking means.

In another example, the locking means may comprise an electromechanical locking device as it allows a simple and optimized solution.

In an example, the locking means may be remotely operated for activating or disactivating the corresponding vibration damping device. Thus, the resultant natural frequency of the vibrating devices can be adapted at any position of climbing crane, not being necessary to be accessible to the operator.

In an example each vibration damping device may be remotely operated by remotely actuating in the corresponding locking means.

In an example, the corresponding vibration damping device is interchangeable. Thus, it may be easily removed and interchanged by other vibration damping device with another natural frequency allowing to easily adapt to any wind turbine.

In accordance with the invention there is further provided a method of erecting a wind turbine with a climbing crane. The method may comprise the following steps:
- Coupling at least a vibration damping device to a climbing crane and
- coupling the climbing crane to the tower, so that the vibration damping device may displace along the tower with the climbing crane as the climbing crane climbs, the vibration damping device being configured for damping at least a first vibration frequency of the erected tower when oscillates with respect to the tower.

In an example, each vibration damping device may comprises a mass which is fixed to the climbing crane 20 through a spring, dashpot and/or a rope, so that the mass can oscillate with respect to the tower.

In an example, a plurality of vibration damping devices may be coupled to the climbing crane. The climbing crane may erect a corresponding tower segment until the whole tower is formed. In each moment, the natural resultant frequency of the plurality of vibration damping devices may be adjusted to the first vibration frequency of each erected part of the tower by activating or deactivating the corresponding vibration damping device.

In an example each vibration damping device may be activated or deactivated by acting on locking means which maintain the vibration damping device in an inactive condition avoiding any possibility of free oscillation of said damping device with respect to the erected part of the tower.

In an example the activation and/or deactivation of the corresponding mass damping device is made through a remote control.

Advantages relating to the described climbing crane may as well pertain to the method and vice versa.

Advantageous configurations and embodiments of the climbing crane according to the invention follow from claims dependent on claim 1, as well as the following description. Furthermore, advantageous configurations and embodiments of the method according to the invention follow from claims dependent on claim 10. The advantageous features of the method of erecting the wind turbine, and the climbing crane can generally be combined.

### BRIEF DESCRIPTION OF THE DRAWINGS

Embodiments of the invention are now described, by way of example only, with reference to the accompanying drawings, of which:
Figure 1 shows an example of a wind turbine erected according to an example of a method according to the invention.
Figures 2 and 3 show different steps of an example of the method of erecting a wind turbine according to the invention;
Figure 4 shows a detail of an example of a climbing crane according to the invention; and
Figure 5 shows a detail of another example of a climbing crane according to the invention.
Figure 6 shows a schematic detail of a vibration damper device comprised in the climbing crane shown in figure 4 or in figure 5.

The illustration in the drawings is in schematic form. It is noted that in different figures, similar or identical elements may be provided with the same reference signs.

### DESCRIPTION OF THE DRAWINGS

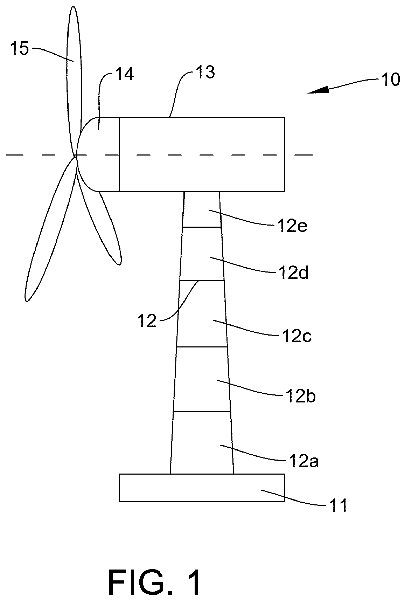

Figure 1 shows an example of a wind turbine 10 which has been erected according to the method of the invention. The wind turbine 10 may comprise a tower 12 that stands in an upright position, a foundation 11 to which the bottom of the tower 12 is connected, the foundation 11 being fixed to the ground, a nacelle 13 mounted on the top of the tower 12, a drive train inside the nacelle 13 not shown in the figures, a rotor 14 mounted on the front end of the nacelle 13, and a plurality of blades 15 connected to the rotor 14.

The upright position refers to the position of the tower on the assembly site, said position being substantially vertical.

In the example shown in the figure 1, the tower 12 may comprise a plurality of tower sections 12a-12e. The plurality of tower sections 12a-12e are stacked forming the tower 12. The length of each tower sections 12a-12e may be different. Furthermore, each tower section 12a-12e may have a frustoconical shape.

In another example not shown in the figures, the tower 12 may comprise a plurality of tower sections 12a-12e of similar length.

In an aspect of the invention, a climbing crane 20 for erecting the wind turbine 10 is provided. The climbing crane 20 may comprise at least a vibration damping device 31 which is configured for damping at least a first vibration frequency of the erected tower 12 when the climbing crane 20 is coupled to the tower 12 during the erection of the wind turbine 10. The term "erection" may be understood as "assembly", "mounting", "lifting" or similar terms.

The first natural frequency also known as the first natural bending frequency is particularly relevant for wind turbines 10. The first vibration frequency may depend on the weight and the stiffness of the erected part or the wind turbine, and also on the wind loads that are specific to the site where the wind turbine 10 is erected and its meteorological conditions.

The vibration damping device 31 may be attached to the climbing crane 20 once, and then is moved together with the climbing crane 20 until the wind turbine 10 is completely erected and the climbing crane 20 is lowered down to the ground.

The climbing crane 20 may be any climbing crane known in the state of the art. The climbing crane 20 may comprise a frame or body 23, a lifting arm 21 coupled to the frame 23, a lifting cable 22, a hook 25 fixed to the lifting cable 22 and a climbing system 24 through which the climbing crane 20 is fixed to the tower 12 and climbs along it. The climbing crane 20 is fixed to the tower 12 by the climbing system 24 when lifting a part of the wind tower 10, said climbing system 24 being configured for displacing the climbing crane 20 along the tower 12 once the corresponding tower segment has been mounted.

The climbing crane 20 may be configured for elevating and stacking each of the tower sections 12a-12e to form the tower 12, said climbing crane 20 climbing along the tower sections 12a-12e which have already been erected, and mounting once another tower section has been positioned above the last erected tower section. Once the complete tower 12 has been erected, the climbing crane 20 positioned at the end of the erected tower 12 may elevate and mount the nacelle 13 on the top of the tower 12, and after that the rotor 14 and the plurality of blades 15.

As it has been explained before, the first natural frequency of the erected wind turbine 10 changes as more parts of the wind turbine 10are erected or assembled. For example, the first natural frequency of the first erected tower section 12a is smaller than the first natural frequency of the full erected tower 12, and furthermore when the nacelle 13 is mounted the first natural frequency of the whole also changes. In particular, the first natural frequency of the whole also changes if the nacelle 13 is installed without the drive train or if it is installed with the drive train inside.

In an example, the climbing crane 20 may comprise a plurality of vibration damping devices 31, each one being fixed to the frame 23 of the climbing crane 20. Each damping device 31 may be configured for being activated or deactivated for adapting the natural resultant frequency of the plurality of vibration damping devices to the first vibration frequency of the erected tower 12.

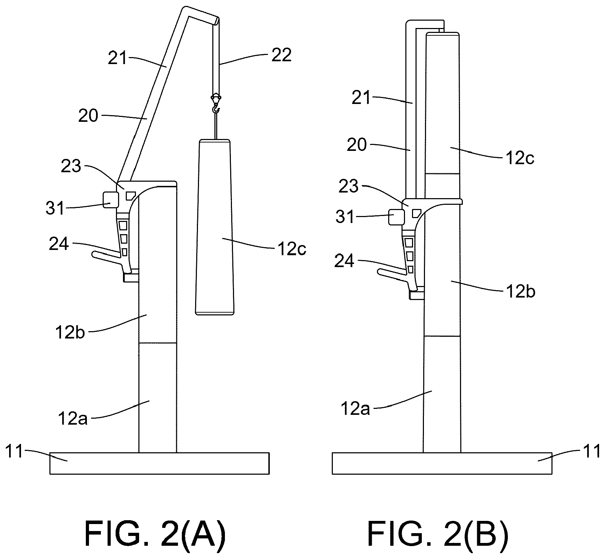

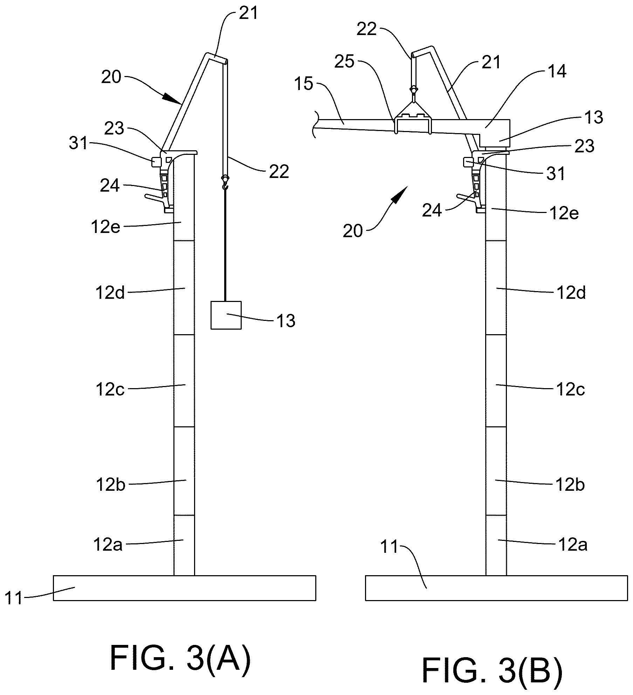

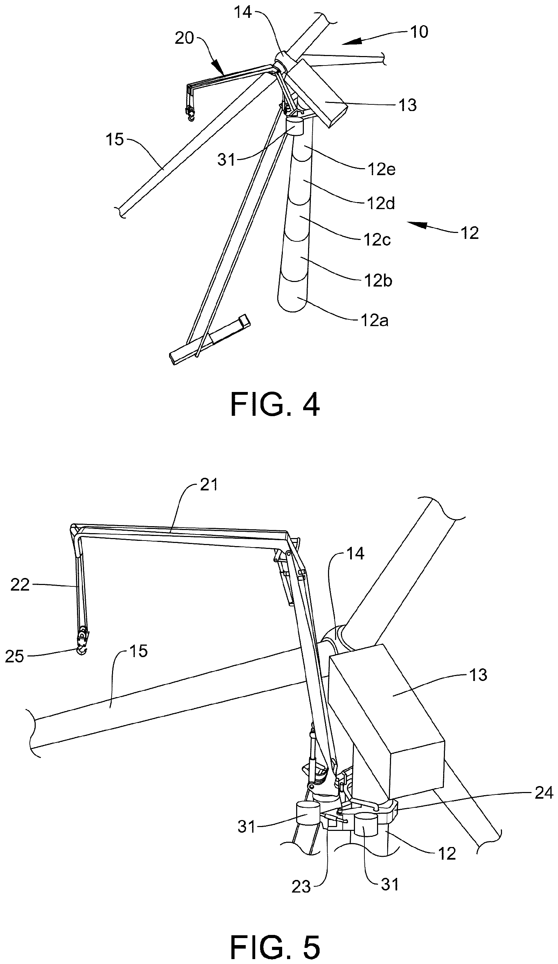

In another example shown in figure 5, the climbing crane 20 may comprise a plurality of vibration damping devices 31, each one being fixed to the frame 23 of the climbing crane 20. Each damping device 31 may be configured for being activated or deactivated for adapting the natural resultant frequency of the plurality of vibration damping devices 31 to the first vibration frequency of part of the wind turbine 10 which has been already erected. That is to say, when the first tower segment 12a is erected and the climbing crane 20 is coupled to the first tower segment 12a, the damping devices 31 are activated or deactivated individually in order to obtain a natural resultant frequency which can damp the first vibration frequency of the first tower segment 12a. Once the second tower segment 12b is erected the damping devices 31 are again individually activated or deactivated for obtaining a natural resultant frequency which can damp the first vibration frequency of the already erected part of the tower 12, that is to say of the first and second tower segments 12a and 12b. After that, the climbing crane 20 climbs until being positioned at the end of the second tower segment 12b, the climbing crane 20 climbs until being positioned at the end of the second tower segment 12b for erecting the third segment 12c. Once the third segment 12c is erected, the damping devices 31 are again individually activated or deactivated and so on until the whole tower 12 is erected as it is shown in figures 2(a) and 2(b). Once the tower 12 has been erected, the climbing crane 20 may be positioned on the top of the tower 12 and erect the nacelle 13 as it is shown in figure 3(a) the plurality of damping devices 31 being adjusted again for adapting to the first vibration frequency of the tower 12 and the nacelle 13, and so on until the whole wind turbine 10 is erected.

The plurality of vibration damping devices 31 may act as a modular vibration damping device. In an example, the plurality of vibration damping device may be coupled to the frame 23 symmetrically distributed with respect the tower 12.

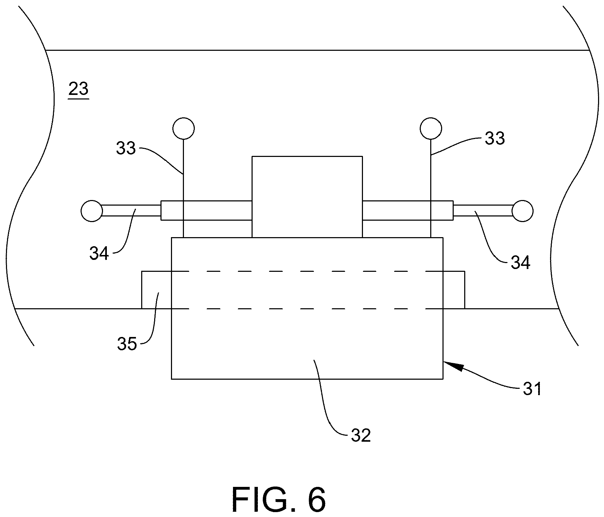

In an example shown in figure 6, each damping device 31 may comprise a tunned mass damper. Said tunned mass damper may comprise a mass 32 and at least one spring 33 and/or one dashpot element 34 through which the mass 32 is fixed to the frame 23 of the climbing crane 20.

In another example, each vibration damping device may comprise a pendulum tunned mass damper. Said pendulum tunned mass damper may comprise a pendulum which end is fixed to a frame of the climbing crane.

In another example, the vibration damping device 31 may comprise a viscous damped pendulum each which end is fixed to a frame 23 of the climbing crane 20.

In another example, the plurality of vibration damping devices 31 may comprise any combination of the damping devices disclosed in the previous examples.

In an example, the climbing crane 20 furthermore may comprise locking means configurated for maintaining the corresponding vibration damping device 31 fixed to the frame 23 of the climbing crane 12 in an inactive condition, the locking means 35 being schematically depicted in figure 6. In the inactive condition, the vibration damping device 31 may be maintained fixed to the frame 23 avoiding any possibility of free oscillation of said damping device 31 with respect to said frame 23 and consequently with respect to the erected part of the tower 12, whereas when the vibration damping device 31 is in an active condition, the corresponding damping device 31 may oscillate with a phase shift with respect to the motion of the erected part of the wind turbine 10 and to which the vibration damping device 31 is coupled through the frame 23. In the active condition, the natural frequency of the damping device 31 may be adapted to the first vibration frequency of the erected part of the wind turbine 10 so that a lower vibration amplitude of the erected part is achieved. As the first vibration frequency of the erected part of the wind turbine 1 changes as more parts of the wind turbine 10 are mounted, the plurality of vibration damping devices 31 may adapt the natural resultant frequency to said first vibration frequency during the erection of the wind turbine 10 activating or deactivating the corresponding vibration damping device 31.

In an example, each locking means may be electromechanical locking means known in the art.

In an example, the locking means may be remotely connected or disconnected, in particular when the climbing crane 20 is in a position which is not accessible for the operators.

The vibration damping device 31 may be fixed to the frame 23 through any known coupling or fixing means in such a way that the vibration damping device 31 does not restrict the operation or climbing of the crane 20.

In an example the corresponding vibration damping device may be interchangeable, that is to say, that it may be coupled to the climbing crane 20 in such a way that it may be easily removed and interchanged by other vibration damping device with another natural frequency.

In further aspect of the invention, the method of erecting a wind turbine 10 with a climbing crane 20 is provided. The method may comprise the following steps:
- Coupling at least a vibration damping device 31 to a climbing crane 20 and
- coupling the climbing crane 20 to the tower 12, so that the vibration damping device 31 may displace along the tower 12 with the climbing crane (20) as the climbing crane 20 climbs, the vibration damping device 31 being configured for damping at least a first vibration frequency of the erected tower 12 when oscillates with respect to the tower 12.

In an example, and as it has been explained before, in an example each vibration damping device 31 may comprises a mass which is fixed to the climbing crane 20 through a spring, dashpot and/or a rope, so that the mass can oscillate with respect to the tower 12. The mass can be also a pendulum fixed by a rope to the climbing crane 20.

In an example, a plurality of vibration damping devices 31 may be coupled to the climbing crane 20. The climbing crane 12 may erect a corresponding tower segment 12a-12e until the whole tower 12 is formed. The climbing crane 20 may climb to the last erected tower section for erecting each time the following tower section. In each moment, in particular when erecting the following tower section, the natural resultant frequency of the plurality of vibration damping devices 31 may be adjusted to the first vibration frequency of each erected part of the tower 12 by activating or deactivating the corresponding vibration damping device 31.

In an example each vibration damping device 31 may be activated or deactivated by acting on the locking means which maintain the vibration damping device 31 in an inactive condition avoiding any possibility of free oscillation of said damping device 31 with respect to the erected part of the tower 12. Once the locking means are deactivated, the corresponding vibration damping device 31 and in particular, the mass of the corresponding vibration damping device 31 is free to oscillate with respect to the tower 12. When the locking means are activated, they may keep the mass fixed to the climbing crane 20 and consequently to the tower 12.

In an example the activation and/or deactivation of the corresponding mass damping device is made through a remote control.

Once the whole tower 12 is erected, the nacelle 13 may be erected on the top of the tower 12 without the drive train, the natural resultant frequency of the plurality of vibration damping devices 31 may be adjusted to the first vibration frequency of the set formed by the tower 12 and the nacelle 13. Once the nacelle 13 is erected, the drive train may be erected and housed inside the nacelle 13, the natural resultant frequency of the plurality of vibration damping devices 31 may be adjusted to the first vibration frequency of the set formed by the tower 12, the nacelle 13, and the drive train.

Once the nacelle 13 and the drive train are mounted onto the top of the tower 12, the climbing crane 20 may elevate the rotor 14 and the blades 15. In this case, the natural resultant frequency of the plurality of vibration damping devices 31 may be adapted to the erected parts. Once the wind turbine 10 is installed, the climbing crane 20 may be lowered to the ground.

In an example, the activation and/or deactivation of the corresponding mass damping device 31 is made through a remote control.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

Advantages and features relating to the described climbing crane may as well pertain to the method of erecting the wind turbine and vice versa.

## Claims

1. Climbing crane for erecting a wind turbine (10), the wind turbine (10) comprising a tower (12), a foundation (11) to which the tower (12) is fixed, and a nacelle (13) arranged at the top of the tower (12), **characterized by** comprising at least a vibration damping device (31) which is configured for damping at least a first vibration frequency of the erected tower (12) when the climbing crane (20) is coupled to the tower (12).

2. Climbing crane according to the previous claim, wherein the vibration damping device (31) comprises a tunned mass damper, the tunned mass damper comprising a mass (32) and at least a spring (33) and/or a dashpot element (34) through which the mass is fixed to a frame (23) of the climbing crane (20).

3. Climbing crane according to claim 1, wherein the vibration damping device (31) comprises a pendulum tunned mass damper comprising a pendulum which end is fixed to a frame (23) of the climbing crane (20).

4. Climbing crane according to claim 1, wherein the vibration damping device (31) comprises a viscous damped pendulum which end is fixed to a frame (23) of the climbing crane (20).

5. Climbing crane according to any of the previous claims, comprising a plurality of vibration damping devices (31), the plurality of vibration damping devices (31), each one of them being configured for being activated or deactivated for adapting the natural resultant frequency of the plurality of vibration damping devices (31) to at least the first vibration frequency of the erected tower (12) .

6. Climbing crane according to the previous claim, wherein the plurality of vibration damping devices (31) are configured for being activated or deactivated for adapting its natural resultant frequency to the first vibration frequency of the partially installed wind turbine (10).

7. Climbing crane according to any of the previous claims, which comprises locking means (35) configurated for maintaining the corresponding vibration damping device (31) fixed to the frame (23) in an inactive condition.

8. Climbing crane according to the preceding claim, wherein the locking means are remotely operated locking means.

9. Climbing crane according to any of claims 1 to 8, wherein the corresponding vibration damping device (31) is interchangeable.

10. Method of erecting a wind turbine with a climbing crane (20), the wind turbine (10) comprising at least a tower (12) and a nacelle (13) arranged at the top of the tower (12), the method comprising the steps of:
• Coupling at least a vibration damping device (31) to a climbing crane (20) and
• Coupling the climbing crane (20) to the tower (12), so that the vibration damping device (31) is displaced along the tower (12) with the climbing crane (20) as the climbing crane (20) climbs, the vibration damping device (31) being configured for damping at least a first vibration frequency of the erected tower (12) when oscillates with respect to the tower (12) .

11. Method of erecting a wind turbine according to the previous claim, wherein each vibration damping device (31) comprises a mass which is fixed to the climbing crane through a spring, dashpot and/or a rope, so that the mass can oscillate with respect to the tower (12).

12. Method of erecting a wind turbine according to any of claims 10 or 11 wherein a plurality of vibration damping devices (31) are coupled to the climbing crane (20), the climbing crane (12) erecting a corresponding tower segment (12a-12e) until forming the whole tower (12), and the natural resultant frequency of the plurality of vibration damping devices (31) being adjusted to the first vibration frequency of each erected part of the tower (12) by activating or deactivating the corresponding vibration damping device (31).

13. Method of erecting a wind turbine according to the previous claim, further comprising the step of erecting the nacelle (13) without a drive train on the top of the erected tower (12), and the step of erecting the drive train inside the nacelle (13), the natural resultant frequency of the plurality of vibration damping devices (31) being adjusted respectively to the first vibration frequency of the set formed by the tower (12) and the nacelle (13) and to the first vibration frequency of the set formed by the tower (12), the nacelle (13) and the drive train, by activating or deactivating the corresponding vibration damping device (31).

14. Method of erecting a wind turbine according to the claims 12 or 13, wherein each vibration damping device (31) is activated or deactivated by acting on locking means which maintain the vibration damping device (31) in an inactive condition avoiding any possibility of free oscillation of said damping device (31) with respect to the erected part of the tower (12),

15. Method of erecting a wind turbine according to the activation and/or deactivation of the corresponding mass damping device (31) is made through a remote control.
